# EUROPÄISCHE PATENTSCHRIFT

(11) **EP 3 198 140 B1**
(45) Veröffentlichungstag und Bekanntmachung des Hinweises auf die Patenterteilung: **11.05.2022**
(21) Anmeldenummer: 15771052.6
(22) Anmeldetag: 16.09.2015
(51) Int. Cl.: F03D 80/10, F21V 5/04

(54) **FLUGBEFEUERUNGSEINRICHTUNG EINER WINDENERGIEANLAGE**
AVIATION BEACON DEVICE FOR A WIND TURBINE
DISPOSITIF DE BALISAGE AÉRIEN POUR ÉOLIENNE

(30) Priorität: 23.09.2014 DE 102014219212; 12.03.2015 DE 102015204459
(43) Veröffentlichungstag der Anmeldung: 02.08.2017
(73) Patentinhaber: Wobben Properties GmbH, 26607 Aurich (DE)
(72) Erfinder: SCHULTZ, Olaf, 28195 Bremen (DE)
(74) Vertreter: Eisenführ Speiser
(86) Internationale Anmeldenummer: PCT/EP2015/071227
(87) Internationale Veröffentlichungsnummer: WO 2016/046045

(56) Entgegenhaltungen:
- EP-A1- 2 213 876
- EP-A1- 2 320 126
- DE-A1- 10 225 288
- DE-A1-102010 027 527
- DE-U1-202007 005 003
- US-A1- 2009 289 804
- US-A1- 2013 278 445
- None

## Beschreibung

Die vorliegende Erfindung betrifft eine Flugbefeuerungseinrichtung einer Windenergieanlage zum Anordnen auf einer Gondel der Windenergieanlage. Weiterhin betrifft die vorliegende Erfindung eine eine solche Flugbefeuerungseinrichtung aufweisende Windenergieanlage und ein Verfahren zum Betreiben einer solchen Flugbefeuerungseinrichtung.

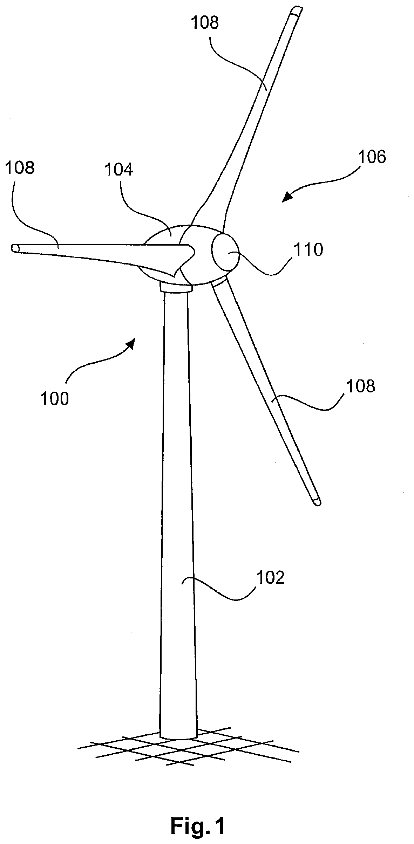

Windenergieanlagen, die aus Wind elektrischen Strom erzeugen und diesen in ein elektrisches Versorgungsnetz einspeisen, sind allgemein bekannt. Ein Beispiel einer solchen Windenergieanlage ist in Fig. 1 schematisch dargestellt.

Üblicherweise haben moderne Windenergieanlagen eine Flugbefeuerungseinrichtung, also eine Einrichtung zum Befeuern einer Windenergieanlage. Solche Einrichtungen sind für die meisten Windenergieanlagen, auf Grund der baulichen Höhe, zwingend vorgeschrieben und haben die Aufgabe die Luftfahrt, insbesondere die Piloten, durch Aussenden von Licht- oder Funksignalen, vor Luftfahrthindernissen, wie einer Windenergieanlage, zu warnen. Je nach Standort und den dort vorherrschenden Normen und Gesetzen, werden unterschiedlichste Anforderungen an eine Flugbefeuerungseinrichtung gestellt, insbesondere an den vertikalen Abstrahlwinkel, den Blinktakt sowie an die Intensität und Wellenlänge des Signals.

Wünschenswert wäre, dass das ausgesendete Signal ausschließlich nur den erreicht, für den das Signal bestimmt ist und möglichst nicht die Umwelt stört.

Aus US 3,858,041, beispielsweise, ist eine mechanische Vorrichtung bekannt, mit der eine Abstrahlung nach unten zum Boden verhindert bzw. reduziert wird. Dadurch wird u.a. verhindert, dass Menschen durch das Signal der Flugbefeuerungseinrichtung gestört, insbesondere geblendet, werden. Nachteilig bei dieser Lösung ist vor allem der Umstand der mechanischen Ausführung.

Aus der EP 2 320 126 A1 ist eine Flugbefeuerungseinrichtung für eine Windenergieanlage bekannt. Die Flugbefeuerungseinrichtung weist ein rohrförmiges Gehäuse und mehrere durch Trennplatten voneinander getrennte Leuchtfenster auf. Als Leuchtmittel ist eine Anzahl von LED Leuchtelementen in mehreren Reihen angeordnet. Um einen bestimmten Abstrahlwinkel für die Leuchtelemente zu definieren, sind Blenden vorgesehen.

Das Deutsche Patent- und Markenamt hat in der Prioritätsanmeldung zu vorliegender Anmeldung folgenden Stand der Technik recherchiert: DE 10 2010 027 527 A1 und DE 20 2007 005 003 U1.

Aufgabe der vorliegenden Erfindung ist es daher, wenigstens eines der vorgenannten Probleme zu adressieren. Insbesondere soll der bekannte Stand der Technik verbessert werden und eine Flugbefeuerungseinrichtung vorgeschlagen werden, die auf eine zusätzliche mechanische Vorrichtung zum Steuern der Abstrahlung eines Signals verzichtet. Zumindest soll gegenüber dem bisher Bekannten eine alternative Lösung vorgeschlagen werden.

Erfindungsgemäß wird eine Flugbefeuerungseinrichtung nach Anspruch 1 vorgeschlagen.

Es wird somit eine Flugbefeuerungseinrichtung einer Windenergieanlage zum Anordnen auf einer Gondel der Windenergieanlage vorgeschlagen, die wenigstens drei ringförmig und konzentrisch um eine gemeinsame Mittelachse angeordnete Rundstrahlabschnitte umfassen. Jeder Rundstrahlabschnitt weist einen ringförmig und konzentrisch um die Mittelachse angeordneten Linsenabschnitt auf, mit einer senkrecht zur Mittelachse definierten Strahlebene, und wenigstens einen Leuchtmittelring mit ringförmig und konzentrisch um die Mittelachse angeordnete Leuchtmitteln zum Abstrahlen von Licht durch den Linsenabschnitt. Jeder Leuchtmittelring ist vorbereitet zum Abstrahlen von Licht mit einer mittleren Abstrahlrichtung, die bezogen auf die Strahlebene einen Abstrahlwinkel aufweist. Die Abstrahlrichtung hängt von einer axialen Position des Leuchtmittelrings zu dem Linsenabschnitt ab. Wenigstens einer der Rundstrahlabschnitte weist wenigstens zwei axial zu einander versetzte Leuchtmittelringe auf zum Abstrahlen mit unterschiedlichen Abstrahlwinkeln. Die Flugbefeuerungseinrichtung weist eine Steuereinheit auf, die dazu eingerichtet ist, durch selektives Ansteuern der zwei Leuchtmittelringe die Abstrahlcharakteristik der Flugbefeuerungseinrichtung zu variieren.

Durch den ringförmigen Aufbau der Flugbefeuerungseinrichtung durch die Rundstrahlabschnitte, ist die Flugbefeuerungseinrichtung eingerichtet, das Licht in 360° horizontaler Richtung abzustrahlen. Alle Rundstrahlabschnitte sind um dieselbe konzentrische Achse und bestimmungsgemäß übereinander angeordnet. Bei jeweils gleichem Außendurchmesser bilden sie somit einen etwa zylindrischen Aufbau bilden. Sie können aber grundsätzlich auch unterschiedliche Durchmesser haben.

Ein Rundstrahlabschnitt ist somit eine ringförmige Anordnung, mit einem Linsenabschnitt und einem oder mehreren Leuchtmittelringen.

Der Linsenabschnitt ist insbesondere vollständig umlaufend und kann bspw. als Gürtellinse ausgebildet sein, insbesondere aus einem lichtdurchlässigen und wetterbeständigen Material, wie Kunststoff oder Glas. Die Linsenabschnitte aller Rundstrahlabschnitte zusammen können gleichzeitig ein Gehäuse oder Gehäuseabschnitt der Flugbefeuerungseinrichtung bilden. Ein Linsenabschnitt kann sich auch aus zwei oder mehr ineinander verschachtelten Linsenteilabschnitten zusammensetzen. Solche Linsenteilabschnitte können beispielsweise Linsenringe mit unterschiedlichen Durchmessern sein, die ineinander gesteckt sind. Der konkrete Aufbau hängt dabei auch von den gewählten Leuchtmitteln ab.

Die Leuchtmittel, z.B. Leuchtdioden, strahlen radial nach außen durch den Linsenabschnitt hindurch. Die Leuchtmittel geben dabei keinen einzelnen Strahl ab, sondern geben das Licht in einem Bereich ab. Nachdem das Licht die Linse, bzw. den Linsenabschnitt passiert hat, weist es eine mittlere Strahlrichtung auf. Diese ist gekennzeichnet durch einen Abstrahlwinkel, der in Bezug auf die Strahlebene definiert wird. Bestimmungsgemäß, wenn also die Flugbefeuerungseinrichtung so aufgestellt ist, dass die Mittelachse senkrecht verläuft, ist die Strahlebene eine waagerechte Ebene. Der Abstrahlwinkel ist ein darauf bezogener vertikaler Winkel.

Wenn die mittlere Abstrahlrichtung dann waagerecht ist, beträgt der Abstrahlwinkel 0°. Ist die mittlere Abstrahlrichtung nach oben gerichtet, ist der Abstrahlwinkel positiv, sonst negativ.

Die Abstrahlrichtung wird besonders dadurch bestimmt, wie die Leuchtmittel in Bezug auf die Linse, die hier vereinfachend für den jeweils wirksamen Teil des Linsenabschnitts steht, ausgerichtet sind. Vereinfachend ausgedrückt führt ein Leuchtmittel oder ein Leuchtmittelring, der in der Strahlebene liegt, zu einer etwa waagerechten Abstrahlung, also zu einem Abstrahlwinkel von 0°. Liegt das Leuchtmittel oder der Leuchtmittelring unterhalb der Strahlebene, ergibt sich hierfür eine Abstrahlung nach oben, sonst nach unten. Das kann auch durch eine mittlere Strahlrichtung des jeweiligen Leuchtmittels beeinflusst werden.

Im Ergebnis wird durch die entsprechende Anordnung der Leuchtmittel hinter ihrer Linse die mittlere Abstrahlrichtung nach außen bestimmt. Diese vertikale Richtung betrifft grundsätzlich jeweils den gesamten Leuchtmittelring. Die Abstrahlrichtung kann nun durch eine entsprechende Ansteuerung der Leuchtmittel ausgewählt werden. Dabei können auch, wenn mehrere Leuchtmittelringe eines Rundstrahlabschnitts angesteuert werden, die Abstrahlrichtungen überlagert werden. Dadurch ist die Abstrahlcharakteristik beeinflussbar.

Jeder Rundstrahlabschnitt kann dabei unterschiedlich ausgebildet werden. Durch entsprechende Kombination der Rundstrahlabschnitte und ihrer Leuchtmittelringe können viele unterschiedliche Abstrahlcharakteristiken erzeugt werden.

Dabei ist der Linsenabschnitt, insbesondere die zwei gegenüberliegenden transparenten lichtbrechenden Flächen des Linsenabschnittes, so eingerichtet, dass die Abstrahlcharakteristik des Linsenabschnittes sowohl von der axialen Position des Leuchtmittelrings zum Linsenabschnitt als auch von der optischen Form des Linsenabschnittes selbst abhängt.

Durch wenigstens einen Rundstrahlabschnitt der wenigstens zwei, vorzugsweise drei oder vier, Leuchtmittelringe aufweist, die axial, also entlang der Mittelachse, zu einander versetzt sind, ist die Flugbefeuerungseinrichtung eingerichtet das abzustrahlende Licht in einem anderen Abstrahlwinkel im Vergleich zu Rundstrahlabschnitten mit nur einem Leuchtmittelring abzustrahlen. Die Rundstrahlabschnitte der Flugbefeuerungseinrichtung sind zueinander in axialer Richtung angeordnet. Durch eine Anordnung der Rundstrahlabschnitte zueinander in axialer Richtung, sind sie bei bestimmungsgemäßer Anwendung übereinander angeordnet.

Vorzugsweise sind die Leuchtmittel der Flugbefeuerungseinrichtung LEDs.

Durch eine Verwendung von LEDs, also Leuchtdioden, als Leuchtmittel kann die Flugbefeuerungseinrichtung mit vergleichsweise geringer Baugröße auskommen. Zudem weisen LEDs gegenüber herkömmlichen Leuchtmitteln eine längere Lebensdauer und einen geringeren Stromverbrauch auf. Insbesondere bei einer Ausformung der Flugbefeuerungseinrichtung als Blitzleuchte ist die praktisch trägheitslose Modulier- und Schaltbarkeit einer LED von Vorteil.

Vorzugsweise ist die Flugbefeuerungseinrichtung so eingerichtet, dass von den Leuchtmitteln wenigstens eines oder einige zum Abgeben von Licht mit einer ersten Farbe, insbesondere Rot, und wenigstens ein weiteres oder einige weitere zum Abgeben von Licht mit einer zweiten Farbe, insbesondere Weiß, vorbereitet sind, insbesondere so, dass jeweils ein Leuchtmittelring zum Abstrahlen einer Farbe vorgesehen ist.

Durch die Verwendung von wenigstens zwei von einander verschiedenfarbigen Leuchtmittel ist die Flugbefeuerungseinrichtung eingerichtet, für wenigstens einen ersten und wenigstens einen zweiten Betriebsmodus. Vorzugsweise wird für den ersten Betriebsmodus die Farbe Rot und für den zweiten Betriebsmodus die Farbe Weiß eingerichtet, so dass die Flugbefeuerungseinrichtung sowohl die gesetzlichen Vorschriften einer roten Abstrahlung für ein Nachtfeuer als auch die gesetzlichen Vorschriften einer weißen Abstrahlung für ein Tagfeuer erfüllt. Insbesondere werden die Leuchtmittel so angeordnet, dass ganze Leuchtmittelringe einer ersten Farbe, insbesondere Rot, und einer zweiten Farben, insbesondere Weiß, eingerichtet sind, ein selektives Ansteuern der einzelnen Farben vorteilhaft zu gestalten. Es kann auch in Betracht kommen mit einer dritten Farbe, beispielsweise Grün, Statussignale der Flugbefeuerungseinrichtung zu senden Eine besonders bevorzugte Ausführungsform ist dadurch gekennzeichnet, dass wenigstens einige der Leuchtmittel als rote LEDs ausgebildet sind und eine Mindest-Intensität mit einem Wert der folgenden Liste aufweisen: 10cd, 20cd, 25cd, 30cd, 32cd, 32,5 cd, 50cd, 70cd, 100cd, 200 cd oder 2000 cd.

Durch die Verwendung roter LEDs, die eine Mindest-Intensität mit einem der oben genannten Werte aufweisen, ist es insbesondere möglich durch eine geschickte Kombination von LEDs die Anforderungen des Gesetzgebers an ein Nachtfeuer durch die Verwendung von, insbesondere kostengünstigen, roten Standard-LEDs umzusetzen.

Eine weitere besonders bevorzugte Ausführungsform ist dadurch gekennzeichnet, dass wenigstens einige der Leuchtmittel als weiße LEDs ausgebildet sind und eine Mindest-Intensität mit einem Wert der folgenden Liste aufweisen: 3,4cd, 34cd oder 175cd, wobei das photometrische Werte bzw. Peakwerte beschreibt und dazu beträgt die effektive Intensität 2 cd, 20 cd oder 100 cd.

Durch die Verwendung weißer LEDs, die eine Mindest-Intensität mit Werten von 20.000 cd, 50.000 cd, 100.000 cd oder 200.000 cd aufweisen, ist es insbesondere möglich durch eine geschickte Kombination von LEDs die Anforderungen des Gesetzgebers an ein Tagfeuer durch die Verwendung von, insbesondere kostengünstigen, weißen Standard-LEDs umzusetzen.

Vorzugsweise ist die Steuereinheit der Flugbefeuerungseinrichtung dazu eingerichtet durch selektives Ansteuern einzelner Leuchtmittel oder Leuchtmittelgruppen die Abstrahlcharakteristik der Flugbefeuerungseinrichtung zu variieren.

Die Steuereinheit ist bevorzugt so eingerichtet, dass sie jedes einzelne Leuchtmittel, oder Leuchtmittelgruppen oder Leuchtmittelringe ansteuert, insbesondere ein- und ausschaltet, und dadurch eine Abstrahlcharakteristik der Flugbefeuerungseinrichtung einstellt. Dabei ist die Steuereinheit eingerichtet, bis zu 600 Leuchtmittel oder mehr selektiv anzusteuern. Unter Leuchtmittelgruppen sind beispielsweise benachbarte Leuchtmittel und/oder Abschnitte von Leuchtmittelringen zusammengefasst. Durch die selektive Ansteuerung ist die Flugbefeuerungseinrichtung für eine Vielzahl verschiedener Abstrahlcharakteristiken eingerichtet. Die Abstrahlcharakteristik, die dadurch beeinflussbar ist, umfasst, insbesondere die Parameter: Abstrahlintensität, Farbe, Abstrahlwinkel, sowohl horizontal als auch vertikal, und dadurch auch eine Abstrahlreichweite.

Weiterhin ist die Steuereinheit der Flugbefeuerungseinrichtung bevorzugt dadurch gekennzeichnet, dass die Steuereinheit festprogrammierte Abstrahlcharakteristiken aufweist.

Festprogrammierte Abstrahlcharakteristiken können dazu vorgesehen sein, die generellen am Standort der Windenergieanlage vorherrschenden Anforderungen des Gesetzgebers durch Programmierung zu erfüllen. Es können dadurch für unterschiedliche Regionen oder Länder dieselben Flugbefeuerungseinrichtungen verwendet werden, aber mit unterschiedlicher Programmierung. Dadurch brauchen nicht viele individuell unterschiedliche Flugbefeuerungseinrichtungen gefertigt zu werden, sondern es kann ggf. eine für viele Länder ausreichend sein. Diese festprogrammierten Abstrahlcharakteristiken werden vor der Anordnung der Flugbefeuerungseinrichtung auf der Gondel ein- oder nach Änderung der Gesetze und/oder vorherrschenden Anforderungen am Standort umprogrammiert.

Vorzugsweise kann dadurch die Steuereinheit der Flugbefeuerungseinrichtung im Betrieb der Anlage, insbesondere ereignisabhängig, geändert werden.

Durch das ereignisabhängige Einstellen von Abstrahlcharakteristiken ist es möglich, die Flugbefeuerungseinrichtung flexibel an Situationen anzupassen und sie zu optimieren. Bspw. wird vorgeschlagen, erst bei einem herannahenden Flugzeug die Flugbefeuerung an dieses Flugzeug nach vertikaler und horizontaler Abstrahlcharakteristik darauf anzupassen. Die Flugbefeuerungseinrichtung braucht dann z.B. nur in die Richtung des Flugzeuges abzustrahlen. Dadurch können auch Einflüsse auf die Umwelt reduziert werden, weil dadurch möglichst wenig Licht abgestrahlt wird und daher weniger störend sein kann.

Andererseits könnte ein herannahender Vogelschwarm gezielt geblendet und zum Abdrehen bewogen werden, oder es ist ein Teil der Flugbefeuerung so ausgebildet und angesteuert, dass sie als Orientierung für Zugvögel dienen könnte.

Gemäß einer Ausführungsform wird eine Flugbefeuerungseinrichtung vorgeschlagen, die dadurch gekennzeichnet ist, dass wenigstens eine Abstrahlcharakteristik fest implementiert ist. Es hat sich herausgestellt, dass in vielen Fällen eine Umschaltung nicht erforderlich ist und vielmehr durch geeignete Wahl der Abstrahlcharakteristik diese fest vorgegeben werden kann.

Günstig ist es, eine Anpassung an unterschiedliche örtliche Anforderungen fest vorzusehen. Solche Anforderungen sind häufig gesetzliche Vorgaben und können fest implementiert werden, wenn die Windenergieanlage aufgestellt und die Flugbefeuerung installiert ist. Es kann somit für viele verschiedene Orte, idealerweise für jeden Ort der Welt, eine universelle Flugbefeuerungseinrichtung vorgesehen sein, für die dann nur noch an dem jeweiligen Ort ihre Charakteristik implementiert werden muss.

Das betrifft besonders die rote Abstrahlcharakteristik, also das Nachtfeuer, für das sehr unterschiedliche Vorschriften bestehen können.

Das Implementieren der wenigstens einen festen Charakteristik kann durch Hardware-Maßnahmen wie das Trennen nicht benötigter Versorgungs- oder Steuerleitungen erfolgen oder es können entsprechende Schalter vorgesehen sein. Es kommt aber auch in Betracht, durch eine Steuerung die feste Implementierung vorzusehen.

Vorzugsweise ist wenigstens eine fest implementierte Abstrahlcharakteristik vorgesehen, die im Wesentlichen nur nach oben abstrahlt, insbesondere so, dass die Flugbefeuerungseinrichtung bei bestimmungsgemäßer Verwendung auf der Windenergieanlage nicht nach unten abstrahlt. Hier liegt die Erkenntnis zu Grunde, dass eine Abstrahlcharakteristik nur nach oben, also von einer horizontalen Ebene aufwärts, für die Sicherheit des Flugverkehrs ausreichend ist. Störungen der Bevölkerung und/oder des Straßenverkehrs können so sicher und dauerhaft ausgeschlossen werden. Auch eine Fehlprogrammierung wir hierdurch vermieden. Anstelle einer veränderbaren Charakteristik, die die Möglichkeit schafft, nach unten strahlendes Licht auszuschalten, wenn es stört und nicht benötigt wird, wird nun vorgeschlagen, in dem unteren Bereich grundsätzlich keine Abstrahlung vorzusehen. Eine Anpassung an unterschiedliche Situationen wird vermieden, wodurch auch ein fehlerhaftes Umschalten vermieden wird, und für die Flugsicherheit ist es dennoch ausreichend.

Eine solche Abstrahlcharakteristik nur nach oben wird in vorteilhafter Weise durch einen Aufbau gemäß wenigstens einer vorstehend beschriebenen Ausführungsform erreicht. Besonders die Anordnung der Leuchtmittelringe relativ zu dem entsprechenden Linsenabschnitt schafft auf einfache Weise diese Möglichkeit, eine solche Abstrahlcharakteristik zu realisieren. Es braucht keine spezielle Ausgestaltung der Linse vorgesehen zu sein und auch keine Abdeckung oder dergleichen.

Eine weitere Ausführungsform schlägt eine Flugbefeuerungseinrichtung vor, die dadurch gekennzeichnet ist, dass wenigstens eine fest implementierte Abstrahlcharakteristik einen unteren Abstrahlwinkel von wenigstens -5°, insbesondere etwa -2° aufweist, wobei unterhalb dieses unteren Abstrahlwinkels die Lichtstärke weniger als 10%, insbesondere weniger als 5% der maximalen Lichtstärke der Abstrahlcharakteristik beträgt. Das ist vorzugsweise vorgesehen für eine Abstrahlcharakteristik, die im Wesentlichen nach oben strahlt, die nämlich im Bereich unterhalb von -5° bzw. -2° nur noch sehr schwach ist. Es ist zu beachten, dass bereits ein deutlich geringerer Wert als die maximal in der Abstrahlcharakteristik auftretende Lichtstärke als signifikant wahrgenommen wird und somit auch schon eine Reduzierung der Lichtstärke bei einem Abstrahlwinkel von 0° auf 60 % als eine Abstrahlung nach oben angesehen werden kann.

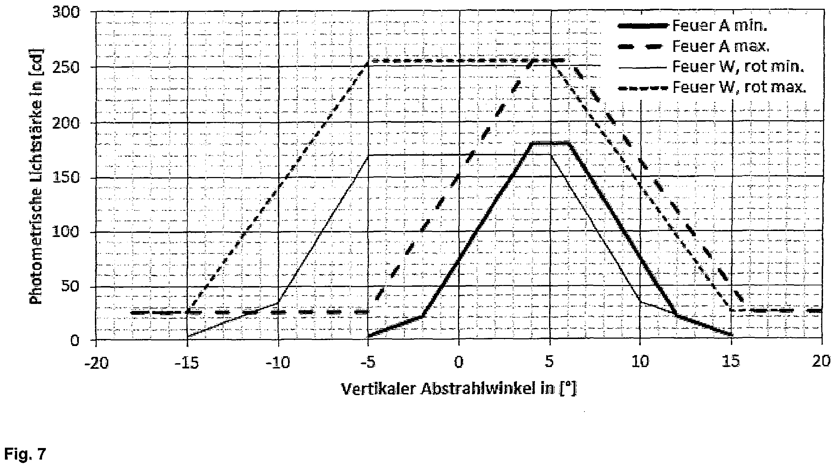

Vorzugsweise wird somit vorgeschlagen, dass die Lichtintensität unter einem Abstrahlwinkel von 0° weniger al 70%, vorzugsweise weniger als 60%, insbesondere weniger als 50% der maximalen Lichtstärke der Abstrahlcharakteristik beträgt und insbesondere mit geringeren Abstrahlwinkeln weiter abnimmt. Zur Veranschaulichung wird hier auch auf die später noch beschriebene Figur 7 verwiesen.

Vorzugsweise strahlt die Flugbefeuerungseinrichtung nur nach oben ab, wobei eine scharfe Trennung kaum oder nur aufwändig möglich ist. Es wurde aber erkannt, dass zum Vermeiden störenden Lichts am Boden ausreichend ist, wenn nur geringe Mengen des Lichts, also nur ein geringer Lichtstrom den Boden erreicht. Ein kleiner Teil kann somit zugelassen werden.

Gemäß einer Ausführungsform ist vorgesehen, dass wenigstens zwei fest implementierte Abstrahlcharakteristiken vorgesehen sind, von denen eine erste für ein rotes Nachtfeuer und eine zweite für ein weißes Tagfeuer vorgesehen sind. Diese beiden fest implementierten Abstrahlcharakteristiken können auch gleich sein, wobei sie sich aber in der Intensität und natürlich in der Farbe unterscheiden.

Vorzugsweise ist eine Windenergieanlage wenigstens mit einer Flugbefeuerungseinrichtung nach einem der vorstehenden Ausführungsformen versehen.

Durch das Einrichten einer Windenergielage mit wenigstens einer Flugbefeuerungseinrichtung ist die Windenergieanlage am Tag und in der Nacht weitestgehend als Flughindernis erkennbar. Vorzugsweise ist eine Windenergieanlage für eine permanente Ausleuchtung in 360° horizontaler Richtung mit wenigstens zwei Flugbefeuerungseinrichtungen eingerichtet. Beispielsweise leuchtet die zweite Flugbefeuerungseinrichtung die Sektoren aus, in denen keine Ausleuchtung durch die erste Flugbefeuerungseinrichtung stattfindet, beispielsweise auf Grund von defekten Leuchtmittel und/oder Abdeckung durch eines durch die erste Flugbefeuerungseinrichtung angestrahlten Rotorblattes.

Besonders, weil jeweils ein Rotorblatt bei seiner Bewegung eine Flugbefeuerungseinrichtung partiell und temporär verdecken kann, ist häufig eine zweite Flugbefeuerungseinrichtung vorgesehen. Dort, wo aber eine Verdeckung durch ein Rotorblatt nicht auftreten kann, also, vereinfacht ausgedrückt, nach hinten, brauchen die beiden Flugbefeuerungseinrichtungen nicht doppelt zu strahlen. Sie können dort z.B. jeweils einen 90°-Sektor nicht auszustrahlen. Das kann durch eine vorprogrammierte, feste Einstellung erreicht werden.

Gemäß Anspruch 12 wird ein Verfahren zum Betreiben einer Flugbefeuerungseinrichtung nach einem der vorstehende erläuterten Ausführungsformen vorgeschlagen, wobei die Leuchtmittel so angesteuert werden, dass eine vorbestimmte Abstrahlcharakteristik erzeugt wird und/oder in einem vorbestimmten Sektor ein- und/oder ausgeschaltet wird.

Gemäß einer weiteren Ausführungsform wird vorgeschlagen, von einem Leuchtmittelring nur einige Leuchtmittel, z.B. nur jedes zweite, anzusteuern, um dadurch die Abstrahlintensität zu verringern.

Das Verfahren schlägt besonders vor, Abstrahlungscharakteristiken der erläuterten Flugbefeuerungseinrichtungen, besonders wenn sie auf einer Windenergieanlage betrieben werden, zu steuern.

Die Leuchtmittel können so angesteuert werden, dass eine vorbestimmte, beispielsweise festprogrammierte, Abstrahlcharakteristik erzeugt wird, wobei die vorbestimmte Abstrahlcharakteristik beispielsweise aus einem elektronischen Festspeicher abgerufen wird. Es können auch einzelne vorbestimmte Sektoren der Abstrahlcharakteristik ein- und/oder ausgeschaltet werden, beispielsweise zu einer bestimmten Uhrzeit.

Gemäß einer Ausführungsform wird im laufenden Betrieb durch entsprechende Ansteuerung der Leuchtmittel und/oder Leuchtmittelringe die Eigenschaft des Abstrahlens der Flugbefeuerungseinrichtung eingestellt oder verändert werden kann.

Um eine effektive Steuerung der Flugbefeuerungseinrichtung für viele Standort und/oder Ereignisse zu ermöglichen, erfolgt auch eine Ansteuerung der Leuchtmittel, Leuchtmittelgruppen und/oder Leuchtmittelringe so, dass die Abstrahlcharakteristik der Flugbefeuerungseinrichtung dadurch im laufenden Betrieb, beispielsweise bei einem herannahenden Flugzeug, verändert wird. Das kann beispielsweise durch Ein- und/oder Ausschalten erreicht werden.

Weiterhin wird vorgeschlagen, im laufenden Betrieb, insbesondere in Abhängigkeit eines Ereignisses und/oder eines Zeitraumes oder Zeitpunktes eine vertikale Abstrahlcharakteristik, einen horizontalen Sektor zum Abstrahlen und/oder eine Abstrahlintensität einzustellen oder zu verändern.

Durch das Erfassen eines Ereignisses, beispielsweise durch einen mit der Flugbefeuerungseinrichtung verbundenen Sensor, wird über einen Zeitraum, beispielsweise für die Dauer eines Überfluges eines Flugzeuges, oder ab einem Zeitpunkt, beispielsweise zu einer bestimmten Tages- oder Nachtzeit, die Abstrahlcharakteristik der Flugbefeuerungseinrichtung verändert oder eingestellt. Hierbei kann gemäß einer Ausführungsform zwischen einer fest implementierten ersten Abstrahlcharakteristik eines roten Nachtfeuerers und einer fest implementierten zweiten Abstrahlcharakteristik eines weißen Tagfeuers gewechselt werden.

Vorzugsweise wird vor Inbetriebnahme der Flugbefeuerungseinrichtung eine Abstrahlcharakteristik durch eine Festlegung der Ansteuerung der Leuchtmittel, insbesondere Leuchtmittelringe vorgegeben. Gemäß einer Ausführungsform erfolgt vor Inbetriebnahme der Flugbefeuerungseinrichtung eine Implementierung einer festen Abstrahlcharakteristik oder mehrerer fester Abstrahlcharakteristika. Die Einrichtung kann dadurch universell gefertigt werden, aber am Aufstellungsort an die örtlichen Gegebenheiten und/oder örtlichen Vorschriften angepasst werden und es wird eine Fehlansteuerung vermieden. Besonders werden solche Fehlansteuerungen vermieden, die an anderen Orten erwünscht sind, an dem konkreten Ort aber unerwünscht oder sogar unzulässig sind.

Gemäß einer Ausführungsform wird auch vorgeschlagen, die Abstrahlcharakteristik in horizontaler Richtung, insbesondere sektorweise, einzustellen, oder zu variieren. Bspw. kann in der Nähe eines Flugplatzes die Abstrahlcharakteristik, insbesondere auch der Abstrahlwinkel, in einer Richtung zum Flugplatz anders vorgesehen sein als in einer dem Flugplatz abgewandten Richtung, weil aus der einen Richtung startenden und aus der anderen Richtung landende Flugzeuge kommen. Ist die Flugbefeuerungseinrichtung aber auf eine Gondel einer Windenergieanlage installiert, verändert sich die horizontale Ausrichtung der Flugbefeuerungseinrichtung mit der Azimutnachstellung der Windenergieanlage. Es wird somit vorgeschlagen, die Flugbefeuerungseinrichtung abhängig der Azimutposition der Gondel anzusteuern, insbesondere eine in horizontaler Richtung variierende Abstrahlcharakteristik entsprechend der Azimutposition anzupassen.

Die vorliegende Erfindung wird nun nachfolgend exemplarisch anhand von Ausführungsbeispielen unter Bezugnahme auf die begleitenden Figuren näher erläutert.
- Fig. 1: zeigt eine schematische Darstellung einer Windenergieanlage.
- Fig. 2:: zeigt eine schematische Darstellung einer Flugbefeuerungseinrichtung gemäß einer Ausführungsform.
- Fig. 3:: zeigt eine schematische Darstellung von Abstrahlcharakteristiken einer Flugbefeuerungseinrichtung gemäß einer Ausführungsform.
- Fig. 4: zeigt schematisch eine Windenergieanlagengondel in einer Draufsicht.
- Fig. 5: zeigt beispielhaft eine vertikale Abstrahlcharakteristik eines Rundstrahlabschnitts.
- Fig. 6: zeigt beispielhaft eine weitere vertikale Abstrahlcharakteristik eines Rundstrahlabschnitts.
- Fig. 7: zeigt schematisch eine Abstrahlcharakteristik nur für eine Abstrahlung nach oben in einem Vergleich.

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an. Auf der Gondel 104 ist eine Flugbefeuerungseinrichtung 101 angeordnet, alternativ können bspw. auch zwei Flugbefeuerungseinrichtungen 101 vorgesehen sein.

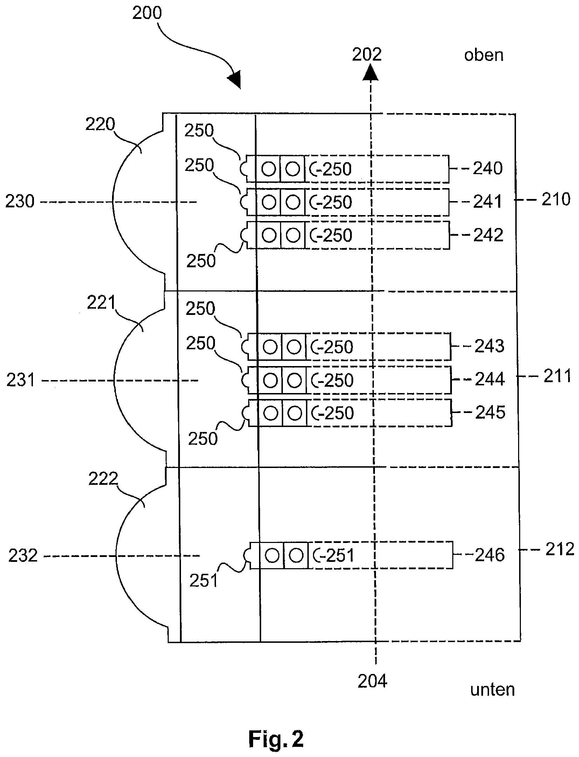

Fig. 2 zeigt eine Flugbefeuerungseinrichtung 200, die drei ringförmig und konzentrisch, zueinander in axialer Richtung 202, um eine Mittelachse 204 angeordnete Rundstrahlabschnitte 210, 211 und 212 aufweist. Die Rundstrahlabschnitte 210, 211 und 212 umfassen jeweils einen vollständig umlaufenden Linsenabschnitt 220, 221 und 222, wobei jeder der Linsenabschnitte 210, 211 und 212 eine Strahlebene 230, 231 und 232 definiert. Die Rundstrahlabschnitte 210 und 211 weisen jeweils drei vollständig umlaufende Leuchtmittelringe 240, 241 und 242 bzw. 243, 244 und 245 auf. Sie haben ringförmig und konzentrisch um die Mittelachse 204 angeordnete weiße LEDs 250. Die jeweils drei Leuchtmittelringe 240, 241 und 242 bzw. 243, 244 und 245 sind axial zu einander versetzt. Der unterste Rundstrahlabschnitt 212 weist nur einen Leuchtmittelring 246 mit roten LEDs 251 auf.

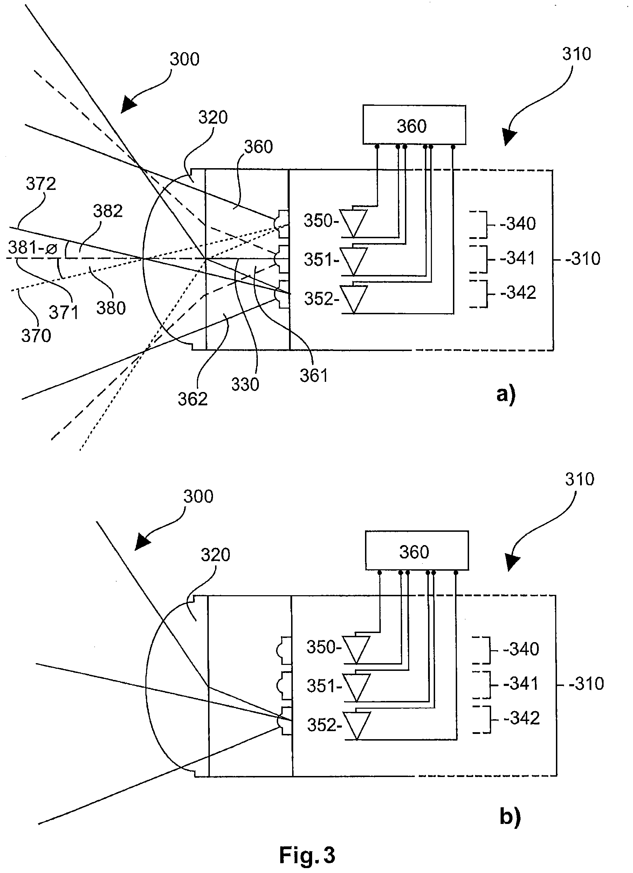

Fig. 2 zeigt insoweit einen Teil der Flugbefeuerungseinrichtung 200 in einer teilweise geschnittenen, schematischen Teilansicht. Die Darstellung der Fig. 2 - gleiches gilt für die noch folgende Fig. 3 - soll besonders mögliche auf die vertikale Richtung bezogene Abstrahlcharakteristiken zeigen. Es befindet sich jeweils ein mittlerer Leuchtmittelring 241 bzw. 244 auf Höhe der betreffenden Strahlebene 230 bzw. 231. Ein Leuchtmittelring 240 bzw. 243 ist jeweils höher angeordnet und ein noch weiterer Leuchtmittelring 242 bzw. 245 ist jeweils niedriger angeordnet. Die beiden Rundstrahlabschnitte 210 und 211 sind in Fig. 2 identisch dargestellt, es können aber auch unterschiedliche Ausbildungen vorgesehen sein. Beispielsweise können die Linsenabschnitte 220 und 221 unterschiedlich ausgebildet sein. Es können unterschiedlich viele Leuchtmittelringe vorgesehen sein, beispielsweise in dem oberen Rundstrahlabschnitt 210 nur zwei Leuchtmittelringe. Die Leuchtmittelringe 240, 241 und 242 des Rundstrahlabschnitts 210 einerseits können auch andere Abstände zueinander haben im Vergleich zu den Abständen der Leuchtmittelringe 243, 244 und 245 des Rundstrahlabschnitts 211. Dadurch können durch die beiden Rundstrahlabschnitte 210 und 211 jeweils unterschiedliche Abstrahlcharakteristiken erzielt werden. Dadurch können durch die Überlagerung der Abstrahlcharakteristiken der beiden Rundstrahlabschnitte 210 und 211 sehr viele unterschiedliche Abstrahlcharakteristiken charakterisiert werden.

Es wird auch darauf hingewiesen, dass die vertikale Beabstandung, also die Beabstandung in Richtung der Mittelachse 204 bzw. in axialer Richtung 202 für einen weit entfernten Betrachter, also beispielsweise den Piloten eines Flugzeugs, keine Rolle mehr spielt. Viel wichtiger ist vielmehr, dass unterschiedliche Charakteristiken erzeugbar sind.

Die Rundstrahlabschnitte 210 und 211 können auch dazu vorgesehen sein, ganz unterschiedliche Anforderungen für Abstrahlcharakteristiken zu erfüllen. Es ist sogar denkbar, dass zwei unterschiedliche Regionen oder sogar zwei unterschiedliche Länder derart unterschiedliche Anforderungen an die Abstrahlcharakteristiken stellen, dass für die eine Region oder das eine Land nur die Verwendung eines Rundstrahlabschnitts, wie beispielsweise des Rundstrahlabschnitts 210, in Betracht kommt und für die andere Region oder das andere Land nur der Betrieb des Rundstrahlabschnitts 211. Häufig wird jedoch eine Kombination mehrerer Rundstrahlabschnitte in Betracht kommen.

Der Rundstrahlabschnitt 212 des Beispiels der Fig. 2 weist nur den einen Leuchtmittelring 246 auf, der rote LEDs 251 aufweist. Diese roten LEDs bzw. der rote Leuchtmittelring sind für den Nachtbetrieb vorgesehen und kommen daher häufig mit weniger Flexibilität in ihrer Abstrahlrichtung aus. Besonders sind solche roten Leuchtdioden bzw. überhaupt rote Leuchtmittel von Flugbefeuerungseinrichtungen weniger blendend und können auch ohne spezielle Strahlrichtung aufgrund des dunklen Umfeldes leicht gesehen werden. Ein einziger Leuchtmittelring kann daher ausreichend sein. Auch dies ist nur zur Veranschaulichung gezeigt, besonders auch um zu veranschaulichen, dass in einer Flugbefeuerungseinrichtung mehrere Rundstrahlabschnitte 210, 211 und 212 vorhanden sein können, die dabei unterschiedlich ausgebildet sein können.

Entsprechend ergibt sich auch aus der Darstellung der Fig. 2, dass durch Überlagerung unterschiedliche Abstrahlcharakteristiken erreicht werden können, was neben Abstrahlrichtung und Intensität auch eine Überlagerung oder Kombination oder Variation hinsichtlich der Leuchtfarbe beinhaltet.

Fig. 3 zeigt die Abstrahlcharakteristik 300 eines in Fig. 2 dargestellten Rundstrahlabschnittes. Der Rundstrahlabschnitt 310 umfasst einen Linsenabschnitt 320 und drei Leuchtmittelringe 340, 341 und 342 dargestellt durch jeweils eine LED 350, 351 bzw. 352. Die einzelnen LEDs 350, 351 und 352 werden selektiv und je nach Anforderung durch die Steuereinheit der Flugbefeuerungseinrichtung 360 angesteuert. Dadurch, dass die Leuchtmittelringe 340, 341 und 342 axial zu einander versetzt angeordnet sind, weisen die drei Leuchtmittelringe 340, 341 und 342 jeweils eine andere Abstrahlcharakteristik auf. Die wird durch Abstrahlcharakteristik 301 verdeutlicht, sie zeigt den Rundstrahlabschnitt 310 nach einer selektiven Ansteuerung, wobei ausschließlich Leuchtmittelring 342 bzw. LED 352 angesteuert wird.

Der exemplarisch gezeigte Rundstrahlabschnitt 310 könnte beispielsweise identisch mit dem Rundstrahlabschnitt 210 der Fig. 2 sein und entsprechend einen Teil einer wie in Fig. 2 veranschaulichten Flugbefeuerungseinrichtung 200 bilden.

Die Fig. 3 zeigt diesen Rundstrahlabschnitt 310 in zwei Ansteuervarianten. Die obere Variante, Variante a) bzw. Fig. 3a zeigt die Ansteuerung aller drei LEDs 350, 351 und 352, die insoweit repräsentativ auch für die entsprechenden Leuchtmittelringe 340, 341 bzw. 342 stehen. Veranschaulichend sind drei Strahlkegel 360, 361 und 362 gezeigt, die jeweils von einer Leuchtdiode 350, 351 bzw. 352 ausgehen. Diese drei Strahlkegel 360, 361 und 362 erreichen dann den Linsenabschnitt 320. Durch die Position der Leuchtdioden 350, 351 bzw. 352 zu dem Linsenabschnitt 320 ergibt sich dann jeweils ein Abstrahlbereich mit einer mittleren Abstrahlrichtung 370, 371 bzw. 372 mit entsprechenden Abstrahlwinkeln 380, 381 bzw. 382. Dabei ist der Leuchtdiode 350 die mittlere Abstrahlrichtung 370 mit dem Abstrahlwinkel 380 zugeordnet. Somit ergibt sich für diese obere Leuchtdiode 350 eine mittlere Abstrahlrichtung 370, die nach unten gerichtet ist und daher einen negativen Abstrahlwinkel 380 aufweist. Die mittlere Leuchtdiode 351 hat somit eine waagerechte mittlere Abstrahlrichtung 371 und damit einen Abstrahlwinkel 381, der den Wert null aufweist. Die weiter unten angeordnete Leuchtdiode 352 hat entsprechend eine nach oben gerichtete mittlere Abstrahlrichtung mit einem positiven Abstrahlwinkel 382.

Es ergibt sich für diesen Fall a) bzw. Fig. 3a somit eine breit gestreute Abstrahlcharakteristik, die auch weit nach oben und weit nach unten abstrahlt.

Die Variante b) bzw. Fig. 3b steuert nur die untere Leuchtdiode 352 an, bzw. den entsprechenden Leuchtmittelring, so dass sich nur der untere Abstrahlkegel 362 ergibt und resultierend auch nur die nach oben gerichtete mittlere Abstrahlrichtung 372 mit dem Abstrahlwinkel 382. Damit ist die Abstrahlcharakteristik des Rundstrahlabschnitts 310 insgesamt nach oben gerichtet.

Von außen bzw. von einem entfernten Beobachter oder Beobachtungspunkt aus betrachtet, strahlt somit der Rundstrahlabschnitt 310, und wenn nur dieser Rundstrahlabschnitt der Flugbefeuerungseinrichtung angesteuert wird, die ganze Flugbefeuerungseinrichtung, in einem weiten Bereich ab. Im unteren Fall strahlt der Rundstrahlabschnitt 310 bzw. die gesamte Flugbefeuerungseinrichtung nur nach oben ab.

Somit kann also die Charakteristik der Flugbefeuerungseinrichtung insgesamt durch entsprechend gezielte Ansteuerung der Leuchtmittel, insbesondere auch in gebündelter Art und Weise über die Ansteuerung der Leuchtmittelringe beeinflusst werden. Diese Beeinflussung über die Ansteuerung ermöglicht es sowohl feste Charakteristiken vorzugeben, um beispielsweise regional unterschiedliche Anforderungen zu erfüllen, als auch dynamische Einstellungen vorzunehmen. Solche dynamischen Einstellungen können u.a. vorgesehen sein für ereignisabhängige Anpassungen wie auch eine Azimutnachführung bzw. der Ausgleich zu einer Azimutnachführung einer Gondel einer Windenergieanlage. Eine solche flexibel einsetzbare Flugbefeuerungseinrichtung ist besonders für Windenergieanlagen geeignet, weil zum einen eine hohe Flexibilität benötigt wird. Zum anderen haben Windenergieanlagen heutzutage die Besonderheit, dass sie zwar nicht vollständig, aber im Wesentlichen standardisiert sind und in ganz unterschiedlichen Regionen aufgebaut werden können. Es können also gleiche oder fast identische Windenergieanlage für gänzlich unterschiedliche Regionen vorgesehen sein und nun auch mit gleichen Flugbefeuerungseinrichtungen ausgestattet werden. Diese Ausstattung kann bereits vorgenommen werden, bevor feststeht, in welche Region die jeweilige Windenergieanlage geliefert werden soll. Also bevor feststeht, welchen Vorschriften die Flugbefeuerungseinrichtung letztlich genügen muss. Hierunter fällt natürlich auch der Fall, dass die Auslieferung einer Windenergieanlage zu einem bestimmten Standort und damit einer bestimmten Region festgelegt ist, aus unvorhersehbaren Gründen aber eine Änderung erfolgt ist und diese Windenergieanlage nun plötzlich an einen anderen Ort geliefert wird. Für die Flugbefeuerungseinrichtung der vorliegenden Erfindung ist dies nun kein Problem mehr. Sie braucht nur durch eine Programmierung entsprechend angepasst zu werden.

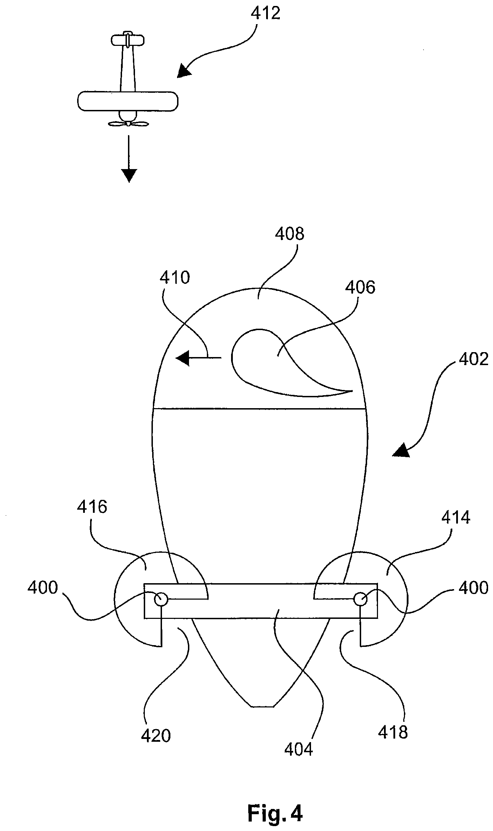

Fig. 4 zeigt schematisch eine Windenergieanlagengondel 402 in einer Draufsicht mit zwei Flugbefeuerungseinrichtungen 400. Die Flugbefeuerungseinrichtungen 400 sind auf einem Instrumententräger 404 installiert, der sich oberhalb der Gondel 402 befindet und zu Wartungszwecken auch begehbar ist.

Die Fig. 4 zeigt von drei Rotorblättern 406 der Gondel 402 zur Veranschaulichung nur eines, nämlich in einer 12-Uhr-Stellung. Das Rotorblatt 406 ist zusammen mit dem Spinner 408 drehbar zum Rest der Gondel 402 angeordnet. Durch den Wind dreht sich das Rotorblatt 406 in die durch einen Pfeil gekennzeichnete Drehrichtung 410. Nähert sich nun ein Flugzeug 412, das hier nur symbolisch und mit unrealistisch geringem Abstand dargestellt ist, so kann durch das Rotorblatt 406 eine der Flugbefeuerungseinrichtungen 400 verdeckt sein. Welche der beiden verdeckt ist, falls überhaupt eine verdeckt ist, hängt von der Stellung des Rotorblatts 406 und der Position des Betrachters, also hier symbolisch des Flugzeugs 412, ab.

Ein solches Problem der Abdeckung durch das Rotorblatt 406 besteht aber nur für Objekte, die sich vor der Windenergieanlage, also vor der Gondel 402, befinden. Befinden sich Objekte hinter der Windenergieanlage bzw. Gondel 402, können sie immer beide Flugbefeuerungseinrichtungen 400 sehen. Es ist daher nur nach vorne notwendig, dass beide Flugbefeuerungseinrichtungen 400 in die Richtung strahlen, also eine doppelte Ausleuchtung vorsehen. Nach hinten ist ein doppeltes Ausleuchten durch zwei Flugbefeuerungseinrichtungen 400 nicht unbedingt notwendig. Eine Möglichkeit besteht nun darin, dass jede der Flugbefeuerungseinrichtungen 180° nach vorne strahlt, um dort eine doppelte Ausleuchtung wegen des Problems der Abdeckung durch das Rotorblatt 406 zu erreichen. Nach hinten können beide Flugbefeuerungseinrichtungen jeweils 90° ausleuchten, so dass sie zusammen 180° nach hinten ausleuchten, aber nicht doppelt. Um dies zu veranschaulichen ist für beide Flugbefeuerungseinrichtungen ein Ausleuchtsektor 414 bzw. 416 eingezeichnet. Jeder Ausleuchtsektor 414 bzw. 416 leuchtet somit 270° aus. Ebenfalls weisen entsprechend beide Flugbefeuerungseinrichtungen einen blinden Sektor 418 bzw. 420 auf, in dem nicht ausgeleuchtet wird.

Die Ausleuchtung der Ausleuchtungssektoren 414 und 416 kann nun auf einfache Art und Weise dadurch erreicht werden, dass die Leuchtmittel bzw. Leuchtmittelgruppen der Flugbefeuerungseinrichtungen 400 entsprechend angesteuert werden.

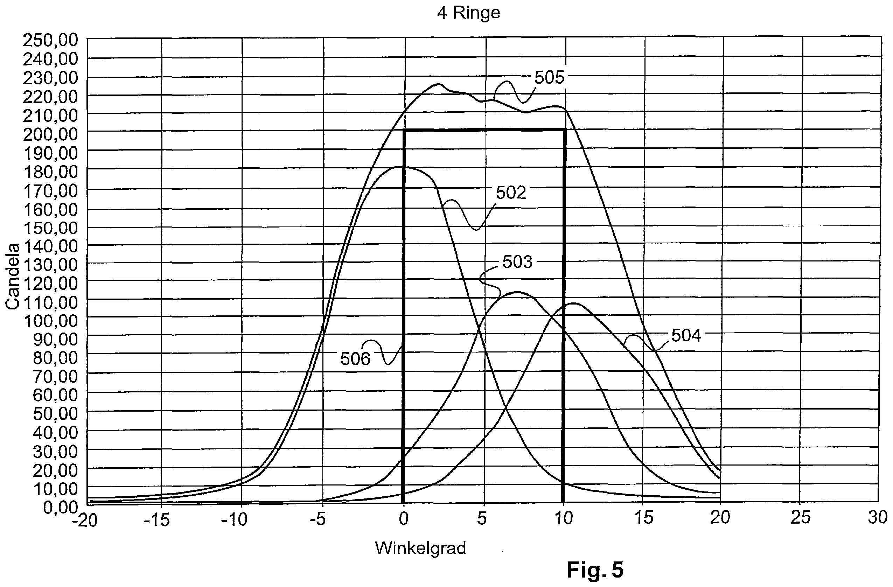

Fig. 5 zeigt beispielhaft eine vertikale Abstrahlcharakteristik eines Rundstrahlabschnitts, der vier axial beabstandete Leuchtmittelringe aufweist. Ans der Ordinate ist die Lichtstärke in Candela (Cd) abgetragen, über die vertikalen Winkelbereiche an der Abszisse. Der Wert 0 bezeichnet dabei die jeweilige Strahlebene und negative Werte sind hier nach oben gerichtete Richtungen, was aber auch anders festgelegt werden kann.

Von den vier Leuchtmittelringen werden für die gezeigte vertikale Abstrahlcharakteristik der Fig. 5 nur der zweite bis vierte Ring, gezählt von unten, verwendet, die jeweils eine der gezeigten zweiten bis vierten Einzelcharakteristik 502 - 504 hervorrufen. Der erste Ring kann für eine andere Charakteristik verwendet werden. Die Gesamtcharakteristik 505, die die Summe der Einzelcharakteristiken bildet, ist ebenfalls eingezeichnet, sowie eine vorgegebene Sollcharakteristik 506. Es ist zu erkennen, dass die Sollcharakteristik 506 durch die Gesamtcharakteristik 505, die auch Summencharakteristik genannt werden kann, eingehalten werden kann.

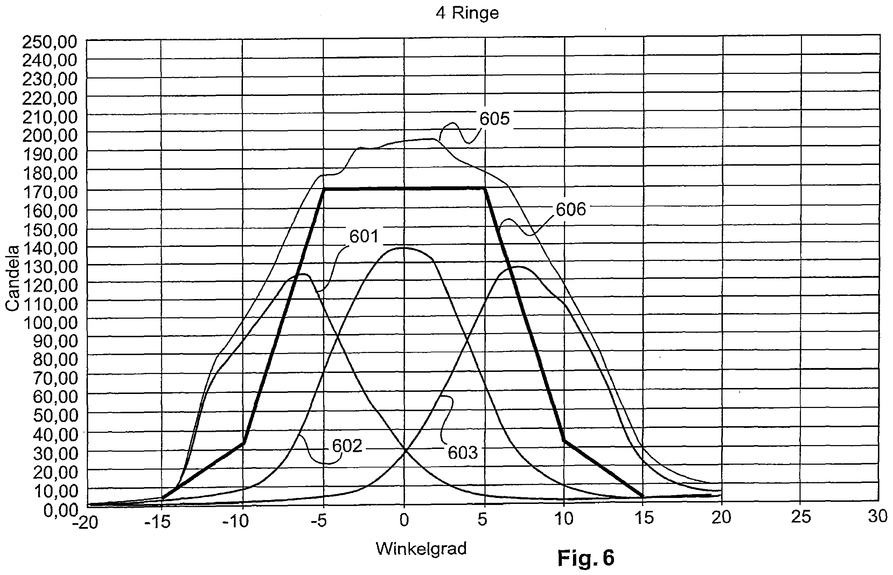

Fig. 6 zeigt vertikale Abstrahlcharakteristiken für denselben Rundstrahl abschnitt wie in Fig. 5, aber mit einer anderen Ansteuerung. Hier werden der erste bis dritte Ring, gezählt von unten, verwendet. Es ist erkennbar, dass sich im Vergleich zu Fig. 5 eine andere Gesamtcharakteristik 605 bzw. Summencharakteristik 605 ergibt, die die gezeigte Sollcharakteristik 606, die hier ebenfalls anders ist, einhalten kann. Die Gesamtcharakteristik 605 bzw. Summencharakteristik 605 ist die Summe der Einzelcharakteristiken 601 bis 603.

Es ist auch zu erkennen, dass die Einzelcharakteristik 602 des zweiten Ringes im Vergleich zu der Einzelcharakteristik 502 der Fig. 5, die auch von dem zweiten Ring erzeugt wurde, eine höhere Intensität aufweist.

Es ist somit erkennbar, dass die jeweilige Gesamtcharakteristik bzw. Summencharakteristik durch die Auswahl der angesteuerten Ringe, also Leuchtmittelringe, als auch durch die Intensität der einzelnen Ansteuerung beeinflusst bzw. eingestellt werden kann.

Es wird somit, was nicht nur für die gezeigten Ausführungsformen gilt, eine veränderbare Flugbefeuerung, die auch als Hindernisbefeuerung oder einfach als Feuer bezeichnet werden kann, vorgeschlagen.

Verändert werden kann sowohl die Leuchtintensität als auch die Abstrahlcharakteristik des Feuers.

Dies geschieht besonders über das Hinzuschalten und/oder Abschalten von einzelnen LED 's bzw. LED-Gruppen und/oder durch unterschiedliche Ansteuerungen. Durch das Hinzuschalten und/oder Abschalten der einzelnen LED's bzw. LED-Gruppen wird besonders die Abstrahlcharakteristik beeinflusst. Durch unterschiedliche Ansteuerungen kann besonders die Intensität beeinflusst werden.

Als Ursache für die Veränderung der Feuereigenschaften kann ein sensorischer Wert , eine automatisierte Vorgabe, wie zum Beispiel eine Zeituhr, oder direkte Befehle, wie z.B. über Fernwirkeinrichtungen dienen.

Ein Beispiel fürdie Anwendung ist eine bedarfsgesteuerte Nachtkennzeichnung. Die Feuer leuchten hierbei auf notwendigem Minimum, um die Anwohner nicht zu stören und ausreichenden Schutz für die Luftfahrzeuge zu gewährleisten. Bei Erkennung eines Luftfahrzeugs schaltet das Feuer auf ein Maximum. Das ist nur ein Beispiel und es kommt bspw. auch in Betracht und wird generell als eine Ausführungsform vorgeschlagen, auch bei Tag Intensität und/oder Abstrahlcharakteristik abhängig von einem Ereignis wie dem beispielhaft genannten, sich nähernden Flugzeug zu verändern, insbesondere an das Ereignis anzupassen.

Es sollen Lösungen umfasst sein, die in einem Feuer oder in mehreren Feuern realisiert werden.

Besonders vorteilhaft ist für das vorgeschlagene Feuer, dass es im gleichen Betrieb veränderbar ist. Das vorgeschlagene Feuer kann seine Einstellung im Normalbetrieb immer wieder verändern.

Vorzugsweise sind 4 Rundstrahlabschnitte vorgesehen, um dadurch eine hohe Flexibilität zu erreichen.

Bevorzugt sind in wenigstens einem Rundstrahlabschnitt jeweils 4 Leuchtmittelringe vorgesehen, um auch sehr unterschiedliche Abstrahlcharakteristiken realisieren zu können.

In der Figur 7 ist eine bevorzugte Abstrahlcharakteristik einer bisherigen Abstrahlcharakteristik gegenübergestellt. Beide Charakteristika sind jeweils durch eine obere Grenze ("max" gestrichelt) und eine untere Grenze (durchgezogen "min") gekennzeichnet, wobei die jeweils stärkeren Linien die neue, bevorzugte Charakteristik betrifft. Positive Werte der vertikalen Abstrahlwinkel bezeichnen dabei eine Abstrahlung nach oben, negative nach unten und 0° bezeichnet eine waagerechte Ebene.

Die konkreten Abstrahlcharakteristiken liegen jeweils zwischen der oberen und unteren Grenze. Die bisherige Abstrahlcharakteristik ist somit im Wesentlichen gleichmäßig um die waagerechte Ebene verteilt, wohingegen die neue, bevorzugte Abstrahlcharakteristik etwa um den Wert von 5° liegt, dabei aber kaum im negativen Bereich liegt, also kaum nach unten abstrahlt. Sie ist im Wesentlichen auf den Bereich nach oben beschränkt.

## Patentansprüche

1. Flugbefeuerungseinrichtung (200) einer Windenergieanlage (100) zum Anordnen auf einer Gondel (104) der Windenergieanlage, umfassend:
- wenigstens drei ringförmig und konzentrisch um eine gemeinsame Mittelachse (204) angeordnete Rundstrahlabschnitte (210, 211, 212) und jeder Rundstrahlabschnitt umfasst
o einen ringförmig und konzentrisch um die Mittelachse angeordneten Linsenabschnitt (220, 221, 222) mit einer senkrecht zur Mittelachse definierten Strahlebene (230, 231, 232) und
o wenigstens einen Leuchtmittelring (240, 241, 242, 243, 244, 245, 246) mit ringförmig und konzentrisch um die Mittelachse angeordneten Leuchtmitteln (250) zum Abstrahlen von Licht durch den Linsenabschnitt, wobei
▪ jeder Leuchtmittelring vorbereitet ist zum Abstrahlen von Licht mit einer mittleren Abstrahlrichtung (370, 371, 372), die bezogen auf die Strahlebene einen Abstrahlwinkel (380, 381, 382) aufweist, und wobei die Abstrahlrichtung abhängt von einer axialen Position des Leuchtmittelrings zu dem Linsenabschnitt,
wobei
- wenigstens ein Rundstrahlabschnitt wenigstens zwei axial zu einander versetzte Leuchtmittelringe aufweist zum Abstrahlen mit unterschiedlichen Abstrahlwinkeln, wobei
- die Flugbefeuerungseinrichtung eine Steuereinheit aufweist, die dazu eingerichtet ist, durch selektives Ansteuern der zwei Leuchtmittelringe die Abstrahlcharakteristik der Flugbefeuerungseinrichtung zu variieren.

2. Flugbefeuerungseinrichtung nach Anspruch 1, **dadurch gekennzeichnet, dass** die Rundstrahlabschnitte zueinander in axialer Richtung angeordnet sind.

3. Flugbefeuerungseinrichtung nach einem der vorstehenden Ansprüche, **dadurch gekennzeichnet, dass** die Leuchtmittel LEDs sind.

4. Flugbefeuerungseinrichtung nach einem der vorstehenden Ansprüche, **dadurch gekennzeichnet, dass** von den Leuchtmitteln wenigstens eines oder einige zum Abgeben von Licht mit einer ersten Farbe, insbesondere Rot, und wenigstens ein weiteres oder einige weitere zum Abgeben von Licht mit einer zweiten Farbe, insbesondere Weiß, vorbereitet sind, insbesondere, dass jeweils ein Leuchtmittelring zum Abstrahlen einer Farbe vorgesehen ist.

5. Flugbefeuerungseinrichtung nach einem der vorstehenden Ansprüche, **dadurch gekennzeichnet, dass** wenigstens einige der Leuchtmittel als rote LEDs ausgebildet sind und eine Mindest-Intensität mit einem Wert der folgenden Liste aufweisen: 10cd, 20cd, 25cd, 30cd, 32cd, 50cd, 70cd, 100cd oder 200cd.

6. Flugbefeuerungseinrichtung nach einem der vorstehenden Ansprüche, **dadurch gekennzeichnet, dass** wenigstens einige der Leuchtmittel als weiße LEDs ausgebildet sind und eine Mindest-Intensität mit einem Wert der folgenden Liste aufweisen: 3,4cd, 34cd oder 175cd.

7. Flugbefeuerungseinrichtung nach einem der vorstehenden Ansprüche, **dadurch gekennzeichnet, dass** die Steuereinheit dazu eingerichtet ist, durch selektives Ansteuern einzelner Leuchtmittel oder Leuchtmittelgruppen die Abstrahlcharakteristik der Flugbefeuerungseinrichtung zu variieren.

8. Flugbefeuerungseinrichtung nach einem der vorstehenden Ansprüche, **dadurch gekennzeichnet, dass** die Flugbefeuerungseinrichtung eine Steuereinheit aufweist, dazu eingerichtet eine Intensität der Leuchtmittel, Leuchtmittelringe und/oder Leuchtmittelgruppen einzustellen bzw. zu variieren.

9. Flugbefeuerungseinrichtung nach Anspruch 7 oder 8, **dadurch gekennzeichnet, dass** die Steuereinheit der Flugbefeuerungseinrichtung fest programmierte Abstrahlcharakteristiken aufweist.

10. Flugbefeuerungseinrichtung nach einem der Ansprüche 7 bis 9, **dadurch gekennzeichnet, dass** die Steuereinheit der Flugbefeuerungseinrichtung dazu vorbereitet ist, die Abstrahlcharakteristik im Betrieb der Anlage, insbesondere ereignisabhängig, zu ändern.

11. Windenergieanlage (100) mit wenigstens einer Flugbefeuerungseinrichtung (200) nach einem der vorstehenden Ansprüche.

12. Verfahren zum Betreiben einer Flugbefeuerungseinrichtung (200) nach einem der Ansprüche 1 bis 10, wobei die Leuchtmittel (250) so angesteuert werden, dass eine vorbestimmte Abstrahlcharakteristik erzeugt wird und/oder in einem vorbestimmten Sektor ein- und/oder ausgeschaltet wird.

13. Verfahren nach Anspruch 12, **dadurch gekennzeichnet, dass** im laufenden Betrieb, insbesondere in Abhängigkeit eines Ereignisses und/oder eines Zeitraumes oder Zeitpunktes
- eine vertikale Abstrahlcharakteristik,
- ein horizontaler Sektor zum Abstrahlen und/oder
- eine Abstrahlintensität
eingestellt oder verändert wird,

14. Verfahren nach einem der Ansprüche 12 oder 13, **dadurch gekennzeichnet, dass** vor Inbetriebnahme der Flugbefeuerungseinrichtung eine Abstrahlcharakteristik durch eine Festlegung der Ansteuerung der Leuchtmittel, insbesondere Leuchtmittelringe vorgegeben wird.

15. Verfahren nach einem der Ansprüche 12 bis 14, **dadurch gekennzeichnet, dass** die Flugbefeuerungseinrichtung, wenn sie auf einer Gondel einer Windenergieanlage installiert ist, abhängig der Azimutposition der Gondel nachgesteuert wird, insbesondere eine in horizontaler Richtung variierende Abstrahlcharakteristik entsprechen der Azimutposition der Gondel im laufenden Betrieb angepasst wird.

## Claims

1. Aircraft beacon device (200) of a wind power installation (100), to be arranged on a gondola (104) of the wind power installation,
comprising:
- at least three omnidirectional emission sections (210, 211, 212) arranged concentrically in a ring around a common mid-axis (204),
each omnidirectional emission section comprising
o a lens section (220, 221, 222) arranged concentrically in a ring around the mid-axis, with a beam plane (230, 231, 232) defined perpendicularly to the mid-axis, and
o at least one lighting means ring (240, 241, 242, 243, 244, 245, 246) having lighting means (250) arranged concentrically in a ring around the mid-axis in order to emit light through the lens section, wherein
▪ each lighting means ring is configured in order to emit light with a central emission direction (370, 371, 372) which makes an emission angle (380, 381, 382) with the beam plane, and wherein the emission direction depends on an axial position of the lighting means ring with respect to the lens section, wherein
- at least one omnidirectional emission section comprises at least two lighting means rings offset axially with respect to one another for emission with different emission angles, wherein
- the aircraft beacon device comprises a control unit which is configured to vary the emission characteristic of the aircraft beacon device by selective driving the two lighting means rings.

2. Aircraft beacon device according to Claim 1, **characterized in that** the omnidirectional emission sections are arranged in the axial direction with respect to one another.

3. Aircraft beacon device according to one of the preceding claims, **characterized in that** the lighting means are LEDs.

4. Aircraft beacon device according to one of the preceding claims, **characterized in that** at least one or some of the lighting means are configured in order to output light with a first colour, in particular red, and at least one further or some further of them are configured in order to output light with a second colour, in particular white, particularly **in that** a lighting means ring for emitting one colour is respectively provided.

5. Aircraft beacon device according to one of the preceding claims, **characterized in that** at least some of the lighting means are formed as red LEDs and have a minimum intensity with a value from the following list:
10 cd, 20 cd, 25 cd, 30 cd, 32 cd, 50 cd, 70 cd, 100 cd or 200 cd.

6. Aircraft beacon device according to one of the preceding claims, **characterized in that** at least some of the lighting means are formed as white LEDs and have a minimum intensity with a value from the following list:
3,4 cd, 34 cd or 175 cd.

7. Aircraft beacon device according to one of the preceding claims, **characterized in that** the control unit is configured to vary the emission characteristic of the aircraft beacon device by selective driving of individual lighting means or lighting means groups .

8. Aircraft beacon device according to one of the preceding claims, **characterized in that** the aircraft beacon device comprises a control unit which is configured to adjust or vary an intensity of the lighting means, lighting means rings and/or lighting means groups.

9. Aircraft beacon device according to Claim 7 or 8, **characterized in that** the control unit of the aircraft beacon device has emission characteristics which are programmed in a fixed manner.

10. Aircraft beacon device according to one of Claims 7 to 9, **characterized in that** the control unit of the aircraft beacon device is configured in order to modify the emission characteristic during operation of the installation, in particular as a function of events.

11. Wind power installation (100) having at least one aircraft beacon device (200) according to one of the preceding claims.

12. Method for operating an aircraft beacon device (200) according to one of Claims 1 to 10, wherein the lighting means (250) are driven in such a way that a predetermined emission characteristic is generated and/or is switched on and/or off in a predetermined sector.

13. Method according to Claim 12, **characterized in that**
- a vertical emission characteristic,
- a horizontal sector for emission and/or
- an emission intensity
is adjusted or modified during continuous operation, in particular as a function of an event and/or a period of time or point in time.

14. Method according to one of Claims 12 or 13, **characterized in that** an emission characteristic is specified by establishing the driving of the lighting means, in particular lighting means rings, before the aircraft beacon device is put into operation.

15. Method according to one of Claims 12 to 14, **characterized in that** the aircraft beacon device, when it is installed on a gondola of a wind power installation, is readjusted as a function of the azimuthal position of the gondola, and in particular an emission characteristic varying in the horizontal direction is adapted according to the azimuthal position of the gondola during continuous operation.

## Revendications

1. Dispositif de balisage aérien (200) d'une éolienne (100) pour l'agencement sur une nacelle (104) de l'éolienne comprenant :
- au moins trois segments omnidirectionnels (210, 211, 212) agencés en anneau et concentriquement autour d'un axe médian (204) commun et chaque segment omnidirectionnel comporte
- un segment de lentille (220, 221, 222) agencé en anneau et concentriquement autour de l'axe médian avec un plan de faisceau (230, 231, 232) défini perpendiculairement à l'axe médian et
- au moins un anneau de moyen lumineux (240, 241, 242, 243, 244, 245, 246) avec des moyens lumineux (250) agencés en anneau et concentriquement autour de l'axe médian pour le rayonnement de lumière par le segment de lentille, dans lequel
- chaque anneau de moyen lumineux est préparé afin de rayonner de la lumière avec une direction de rayonnement (370, 371, 372) médian qui présente par rapport au plan de faisceau un angle de rayonnement (380, 381, 382), et dans lequel la direction de rayonnement dépend d'une position axiale de l'anneau de moyen lumineux par rapport au segment de lentille,
dans lequel
- au moins un segment omnidirectionnel présente au moins deux anneaux de moyen lumineux en déport l'un de l'autre axialement pour le rayonnement avec différents angles de rayonnement, dans lequel
- le dispositif de balisage aérien présente une unité de commande qui est conçue afin de varier par commande sélective des deux anneaux de moyen lumineux la caractéristique de rayonnement du dispositif de balisage aérien.

2. Dispositif de balisage aérien selon la revendication 1, **caractérisé en ce que** les segments omnidirectionnels sont agencés les uns par rapport aux autres dans la direction axiale.

3. Dispositif de balisage aérien selon l'une quelconque des revendications précédentes, **caractérisé en ce que** les moyens lumineux sont des DEL.

4. Dispositif de balisage aérien selon l'une quelconque des revendications précédentes, **caractérisé en ce que**, parmi les moyens lumineux, au moins un ou certains sont préparés pour la sortie de lumière avec une première couleur, en particulier rouge, et au moins un autre ou certains autres sont préparés pour la sortie de lumière avec une seconde couleur, en particulier blanc, en particulier que respectivement un anneau de moyen lumineux est prévu pour le rayonnement d'une couleur.

5. Dispositif de balisage aérien selon l'une quelconque des revendications précédentes, **caractérisé en ce qu'**au moins certains des moyens lumineux sont réalisés comme DEL rouges et présentent une intensité minimale avec une valeur de la liste suivante : 10 cd, 20 cd, 25 cd, 30 cd, 32 cd, 50 cd, 70 cd, 100 cd ou 200 cd.

6. Dispositif de balisage aérien selon l'une quelconque des revendications précédentes, **caractérisé en ce qu'**au moins certains des moyens lumineux sont réalisés comme DEL blanches et présentent une intensité minimale avec une valeur de la liste suivante :
3,4 cd, 34 cd ou 175 cd.

7. Dispositif de balisage aérien selon l'une quelconque des revendications précédentes, **caractérisé en ce que** l'unité de commande est conçue afin de varier, par commande sélective de moyens lumineux individuels ou groupes de moyen lumineux, la caractéristique de rayonnement du dispositif de balisage aérien.

8. Dispositif de balisage aérien selon l'une quelconque des revendications précédentes, **caractérisé en ce que** le dispositif de balisage aérien présente une unité de commande conçue afin de régler ou de varier une intensité des moyens lumineux, anneaux de moyen lumineux et/ou groupes de moyen lumineux.

9. Dispositif de balisage aérien selon la revendication 7 ou 8, **caractérisé en ce que** l'unité de commande du dispositif de balisage aérien présente des caractéristiques de rayonnement programmées fixement.

10. Dispositif de balisage aérien selon l'une quelconque des revendications 7 à 9, **caractérisé en ce que** l'unité de commande du dispositif de balisage aérien est préparée afin de modifier la caractéristique de rayonnement en fonctionnement de l'installation, en particulier en fonction des événements.

11. Eolienne (100) avec au moins un dispositif de balisage aérien (200) selon l'une quelconque des revendications précédentes.

12. Procédé de fonctionnement d'un dispositif de balisage aérien (200) selon l'une quelconque des revendications 1 à 10, dans lequel les moyens lumineux (250) sont commandés de sorte qu'une caractéristique de rayonnement prédéterminée soit générée et/ou soit activée et/ou désactivée dans un secteur prédéterminé.

13. Procédé selon la revendication 12, **caractérisé en ce que** pendant le fonctionnement, en particulier en fonction d'un événement et/ou d'une période ou d'un moment
- une caractéristique de rayonnement vertical,
- un secteur horizontal pour le rayonnement et/ou
- une intensité de rayonnement
est réglé ou modifié.

14. Procédé selon l'une quelconque des revendications 12 ou 13, **caractérisé en ce qu'**avant la mise en service du dispositif de balisage aérien, une caractéristique de rayonnement est prédéfinie par une fixation de la commande des moyens lumineux, en particulier des anneaux de moyen lumineux.

15. Procédé selon l'une quelconque des revendications 12 à 14, **caractérisé en ce que** le dispositif de balisage aérien, lorsqu'il est installé sur une nacelle d'une éolienne, est réajusté en fonction de la position azimutale de la nacelle, en particulier une caractéristique de rayonnement variant dans la direction horizontale est adaptée selon la position azimutale de la nacelle en fonctionnement.
